# EUROPEAN PATENT SPECIFICATION

(11) **EP 1 974 990 B1**
(45) Date of publication and mention of the grant of the patent: **25.02.2015**
(21) Application number: 08150286.6
(22) Date of filing: 15.01.2008
(51) Int. Cl.: B60N 2/44

(54) **Improvements in or relating to the positioning of connectors for electronic devices within motor vehicles**
Verbesserungen an oder in Zusammenhang mit der Positionierung von Steckverbindern für elektronische Geräte in Kraftfahrzeugen
Améliorations de ou associées au positionnement de connecteurs de dispositifs électroniques dans des véhicules à moteur

(30) Priority: 17.02.2007 GB 0703096
(43) Date of publication of application: 01.10.2008
(73) Proprietor: Nissan Motor Manufacturing (UK) Ltd., Cranfield Bedfordshire MK43 0DB (GB)
(72) Inventor: Noble, Paul, Cranfield, Bedfordshire MK43 0DB (GB); Blakey, Roger, Cranfield, Bedfordshire MK43 0DB (GB); Godsell, David, Cranfield, Bedfordshire MK43 0DB (GB); Henry, Etienne, Cranfield, Bedfordshire MK43 0DB (GB); Oyama, Horonori, Cranfield, Bedfordshire MK43 0DB (GB); Uhlarik, Martin, Cranfield, Bedfordshire MK43 0DB (GB); Bis, Ziggy, Cranfield, Bedfordshire MK43 0DB (GB); Schwarz, Stephane, Cranfield, Bedfordshire MK43 0DB (GB)
(74) Representative: Hufton, Victoria Alice

(56) References cited:
- EP-A2- 1 010 573
- FR-A1- 2 753 940
- US-A- 4 533 175
- US-A1- 2004 014 357
- US-A1- 2004 021 349

## Description

The present invention relates to the positioning of connectors for electronic devices within motor vehicles and, in particular, to the provision of connectors that are convenient to as many vehicle users as possible. The term connector in this context is used to refer generally to connectors such as power sockets, USB connectors or connectors for personal music players.

Power sockets within vehicles are used for a variety of different activities e.g. running travel appliances such as travel refrigerators and recharging the ever-increasing number of personal portable electronic devices that are carried by the average vehicle user. As a result it is now common for vehicles to be provided with at least one socket within a vehicle into which the user can plug one or more such devices.

USB connectors, and other similar data communication connectors such as USB2, IEEE1394 (commonly referred to as Firewire®), IEEE1394b (commonly referred to as Firewire 2®) and Ethernet ports, enable compatible electronic devices to communicate with other compatible devices within the vehicle. Throughout the specification these communication cables will be referred to collectively as USB connectors. For example, it is possible to update data on a satellite navigation system using data on a mass storage device. It is also known to provide a USB connector that communicates with the audio system within the vehicle so that music stored on a mass storage device can be played through the vehicle's audio system. When an internet connection has been provided within a vehicle, the provision of a USB connector enables a VOIP phone to be docked or, alternatively, where a plurality of such connectors are provided, enables a number of the passengers to plug in gaming units and indulge in multi-player gaming. Furthermore, the electronic device is typically charged whilst it is plugged into the USB connector.

Personal music players can also be made to communicate with the vehicle's audio system via a suitable connector. Such a connector has typically been provided on the audio system console.

There has been a recent trend in vehicle design emphasising multi-row, multifunction vehicles. This has led to increased variability in the proportion of the seats within a vehicle that are capable of moving independently and being stowed to provide increased luggage space. In each of these configurations the user expects to be able to access at least one connector that is located conveniently in whatever configuration the vehicle seating is arranged.

As a result, it is increasingly common to find vehicles supplied with a plurality of electrical connectors that are designed to be accessible for the various activities mentioned above.

EP1010573 which is considered the closest prior art, as well as FR2753940 disclose examples of such connectors. However, these suffer from accessibility problems.

According to the present invention there is provided a seating portion for a seating assembly in a motor vehicle, the seating portion being movable between at least a first, substantially upright position and a second, substantially horizontal position, wherein the seating portion includes a connector for an electronic device, characterised in that the connector is mounted in a recess in the seating portion and is configured to be accessible when the seating portion is in each of the first and second positions, wherein the seating portion is pivotable between first and second positions, and wherein the recess is configured to be accessible when the connector is in use.

The provision of the connector for an electronic device in a movable portion of the seating assembly enables the connector to be accessible by different users when the seat assembly is in different configurations. This reduces the overall number of connectors that are required within the vehicle. As each connector must be installed in and properly insulated from the surrounding vehicle parts, a reduction in the number of connectors required provides a considerable reduction in the number of parts and thereby the assembly cost and time, without resulting in a reduction in functionality.

The connector may be selected from the group consisting of a power socket, a USB connector and a connector for an MP3 player.

The connector may be mounted in a recess. The provision of the power socket or other connector within a recess reduces the risk of unwanted, inadvertent interaction with the socket by the vehicle user. It also provides protection to the socket from such interactions as such bumps and knocks that can result in damage that compromises the integrity of the socket.

The recess is configured to provide sufficient all-round access for the user to access the socket without impediment. As a result, the recess tends to be large in comparison with the size that would be strictly required to house to socket. In order to make good use of the space around the socket it is configured for use as a storage tray. This provides a convenient area for depositing small electronic items that are being charged using the power socket, thus removing the need for stretching the charging cable to a convenient position for placing the electronic item during charging. The localisation of the charging cable and the electronic item reduces the danger of the item, cable or socket being damaged by unintentional movement of the item as a result of movement of the vehicle or movement of the passengers and/or cargo within the vehicle.

The recess may be provided with a lid. The lid holds items in place within the recess when the seat portion is moved between its first and second positions. This ensures that the recess is usable when the seat portion is in each of its first and second positions. In addition, the lid ensures that the contents of the recess are not visible from the outside of the vehicle and this may help to deter thieves.

The lid may be slidable. The provision of a slidable lid ensures that the lid remains in close proximity to the seat back at all times reducing the chance that the lid may get caught and be pulled away from the seat back. Furthermore, because a sliding lid is always fully engaged with the surface surrounding the recess, there is less chance of rattling noises that could be caused by a pivotable lid that has been incorrectly latched.

The lid may be provided with at least one indentation for sliding the lid. The provision of at least one indentation to allow the user to move the lid from one position to a second position obviates the need of handles protruding from the surface of the seat portion. This provides an improved look and feel to the seating arrangement.

Alternatively, the lid may be pivotable.

The second position may be a stowed position. When the seat portion is a seat back the provision of a second stowed position enables the users in the same row of seats to use the power socket.

The present invention will now be described, by way of example only, with reference to the accompanying drawings in which:
Figure 1 is a schematic showing the second and third rows of a seat assembly incorporating a seat portion according to an example of the present invention;
Figure 2 shows a side perspective view of an alternative example of the present invention;
Figures 3 to 5 show a further alternative example of the present invention in three different modes of use;
Figure 6 shows an exploded view of the pieces that form the example of the present invention shown in Figures 3 to 5; and
Figure 7 shows a final example of the present invention.

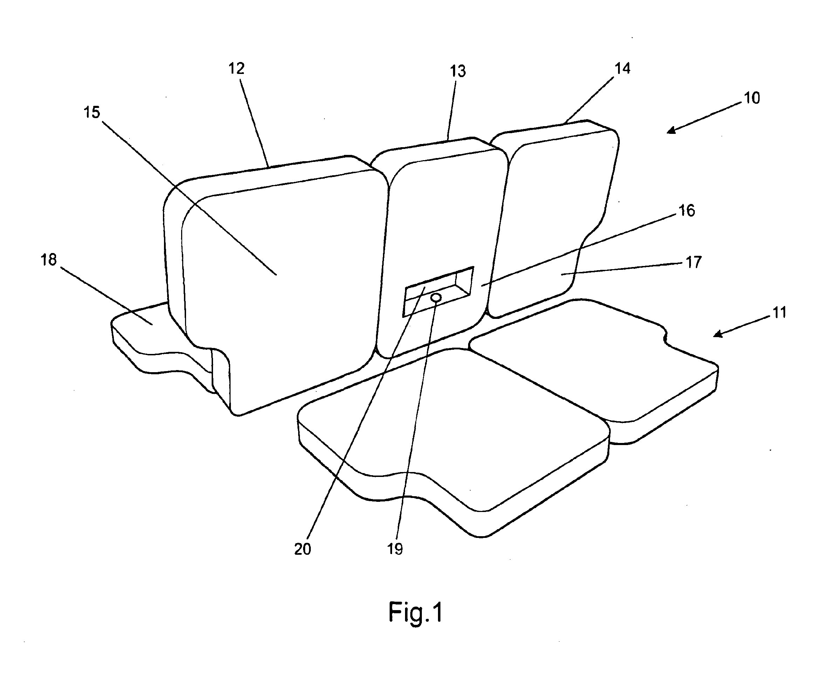

Figure 1 is a schematic showing the second 10 and third 11 seat rows of a three-row vehicle. The second row of seats 10 is divided into three seats 12, 13, 14. Each of these three seats 12, 13, 14 comprises a seat back 15, 16, 17 and a seat cushion 18. The seat cushions corresponding to seat backs 16, 17 are not visible in Figure 1. Each of the seat backs 15, 16, 17 is independently movable between an upright position, in which the seat 12, 13, 14 may be occupied by a passenger, and a stowed position, in which the seat back 15, 16, 17 is substantially horizontal. Typically, the seat back is angled at about 12° to the horizontal when it is "substantially" horizontal as the thickness of the seat cushions prevent the seat back folding right down to a horizontal position. Although the in-use position is referred to throughout as "upright," it will be understood that the seat back 15, 16, 17 may be adjusted through a predetermined range of angles in the vicinity of the vertical depending on the preference of the user. When the seat back 15, 16, 17 is in its stowed position the seat is no longer usable thus providing a considerable increase in the usable storage volume within the luggage area of the vehicle.

Because each of the seat backs 15, 16, 17 is independently movable, the central seat back 16 can be placed in its stowed position whilst seat backs 15 and 17 remain in their upright position. The seat back 16 thereby provides a table that can be used by passengers in both of the remaining seats in the second row. The seat back 16 is provided with a standard 12V power socket 19.

In addition to the use of the power socket 19 by up to two second row passengers when the seat back 16 is in its stowed position, the location of the power socket 19 is also convenient for the third row passengers. Additionally, if the third row seats 11 are stowed, as shown in Figure 1, then the power socket 19 in the seat back 16 is also accessible from the luggage area of the vehicle.

Although, in the example of the present invention illustrated in Figure 1, the power socket 19 is provided in the central seat back 16, it could be provided in any one of the seat backs 15, 16 or 17. In addition, it will be apparent that this invention is not confined to vehicles with three-row seating configurations. Depending on the vehicle layout the power socket 19 could be located in the seat back of any seat that is capable of being stowed. Furthermore, the power socket 19 could be applied to an armrest that is movable between an upright position wherein it is in-line with a seat back and an in-use position in which it extends substantially horizontally for use as an armrest.

In the example shown, the power socket 19 is located within a stowage box or recess 20. However, it could also be provided flush with the seat back 16. The recess 20 in the illustrated example protects the power socket 19 and also acts as a storage tray in which small items can be temporarily located. The power socket is mounted in one of the walls of the recess so that the wiring can run parallel to the seat back 16 rather than being forced to turn through approximately 90° as it reaches the power socket 19.

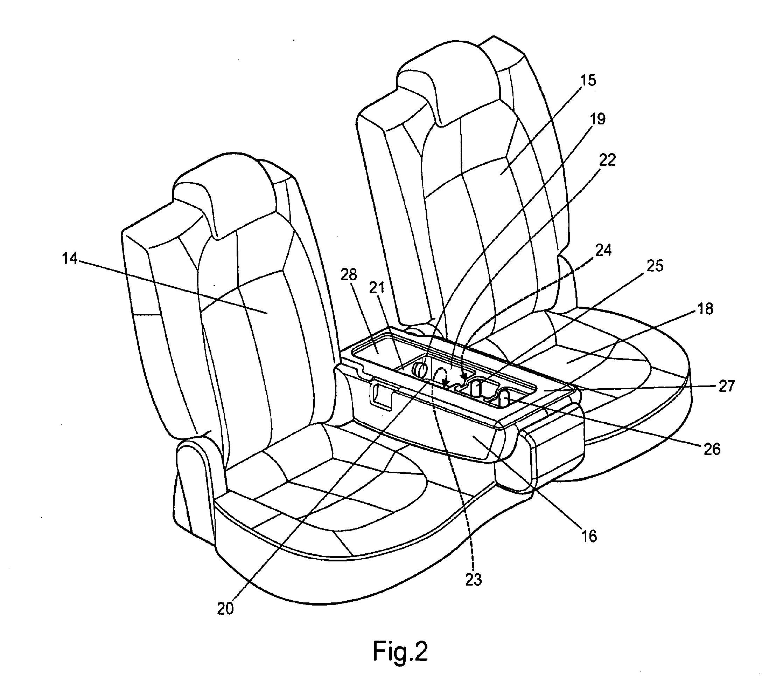

Figure 2 shows the seat back 16 containing the power socket 19 in more detail. The seat back 16 includes a surface 28 that is substantially planar and elongate in proportion with the seat back 16. In the example shown in Figure 2 the surface 28 is substantially rectilinear and extends across the entire width of the seat back 16 and, in a lengthwise direction, along the majority of the length of the seat back 16, excluding only the rear surface of the head restraint. However, it will be readily apparent to the skilled man that the exact shape and the extent of the surface 28 is a matter of design choice and may be chosen to reflect the styling of the vehicle.

The surface 28 is provided with a recess 20 in which the power socket 19 is mounted. The recess 20 is provided within a portion of the surface 28 nearest to the point about which the seat back 16 pivots between its upright and stowed positions. This minimises the required path length of the wiring that supplies the power socket.

The wall 21 of the recess containing the power socket 19 and the two adjacent walls 22, 23 extend substantially orthogonal to the surface of the seat back 16. This configuration ensures that the contents of the recess 20 are easily accessible. The wall 24 opposite the wall 21 containing the power socket 19 is angled to provide a slope. The angle of slope is chosen to match the angle of the cup holders so that, when the seat back 16 is moulded, that the mould does not foul the wall 24 of the recess 20. However, this configuration has the advantage that small items that have been placed into the recess 20 can easily be scooped out of the recess 20 by the user.

The surface 28 of the seat back 16 is also provided with two further recesses 25, 26 which form cup holders. Each recess 25, 26 is flush with the surface of the seat back so that nothing protrudes from the surface 28 that may form an uncomfortable surface for the passenger in the row behind the seat back 16 when the seat back 16 is in its upright position. The inner surface of the recesses is provided with corrugations intended to at least partially to secure a cup. It will be immediately apparent that the cup holders, unlike the power socket 19, are only intended to hold filled cups when the seat back is in its stowed position.

The part of the surface 28 of the seat back 16 in which the recesses 20, 25 and 26 are located is surrounded by a lip 27. The lip 27 reduces the extent to which any spillage from a cup placed in the cup holders escapes onto the upholstered parts of the vehicle interior. However, the exact size and shape of the lip 27 is chosen as a result of styling requirements that are specific to the vehicle.

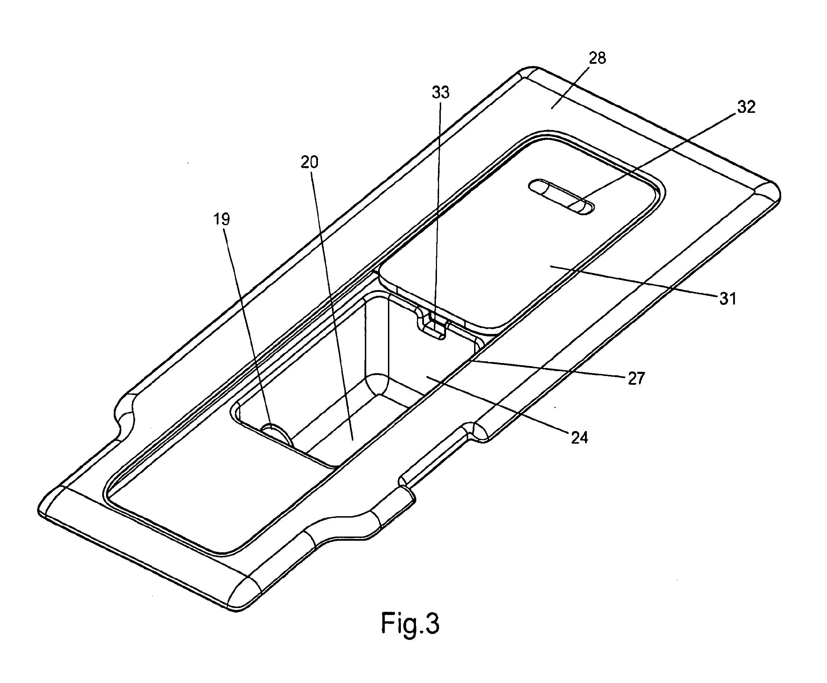

A further example of the present invention is shown in Figures 3 to 5. This example of the present invention has many features in common with the example shown in Figure 2 and the same reference numerals are used for features that are present in both examples.

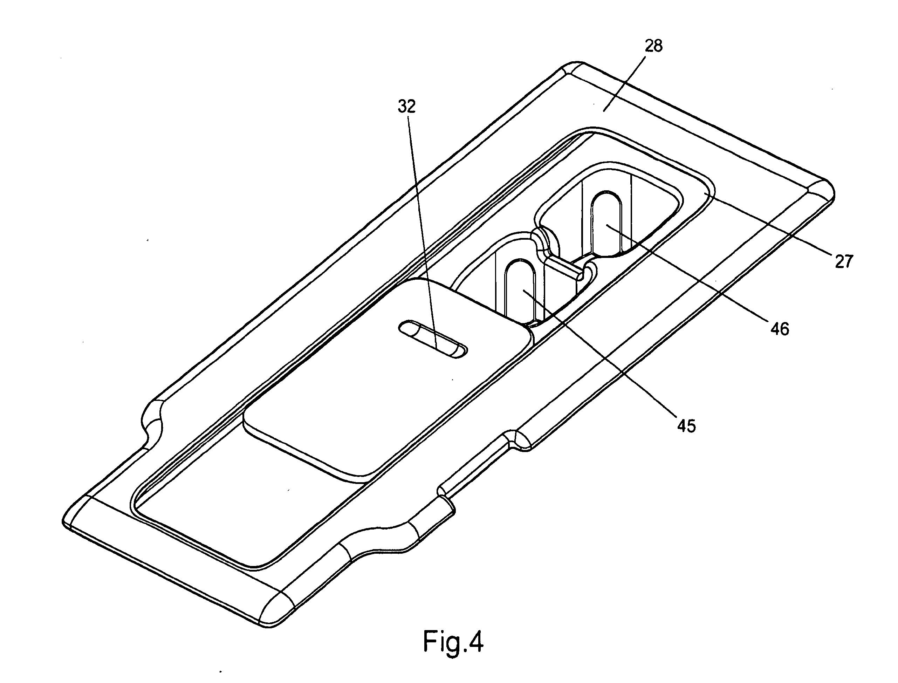

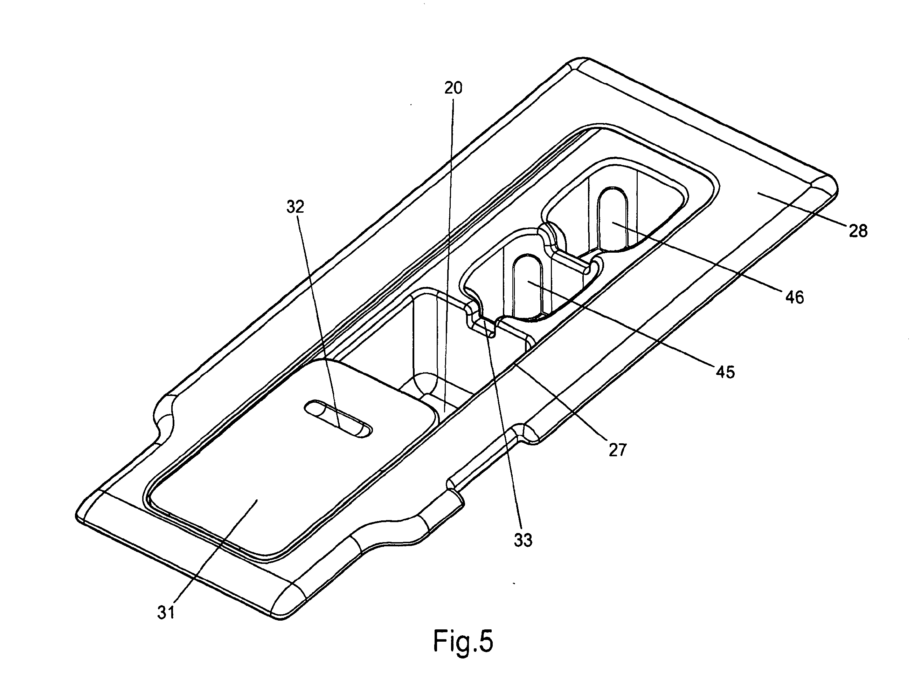

In the example of the present invention shown in Figures 3 to 5, the lip 27 constrains the movement of a lid 31. The lid 31 is substantially lamina and extends over approximately one third of the surface 28 of the seat back 16, in the lengthwise direction. The lid 31 is provided with at least one indentation 32 which is designed to enable the user the slide the lid 31 in the lengthwise direction thus moving the lid 31 from the position shown in Figure 3, through that shown in Figure 4, to the position shown in Figure 5. An additional indentation (not shown) may be provided and configured such that one indentation is typically used to move the lid 31 in each direction.

The cross section of the indentation 32 or indentations is/are U-shaped so that the user can easily insert a finger or thumb to engage with the lid 31 and slide it along the lip 27. An indentation 32 or indentations is/are provided in place of a handle because any integer that protrudes from the surface of the lid 31 is potentially less desirable for users in the row of seats behind the seat back 16, when the seat back 16 is in its upright position.

When the lid 31 is positioned as illustrated in Figure 3, in the portion of the surface 28 of the seat back 16 adjacent the head restraint, the lid 31 covers the cup holder recesses 25, 26. In this position the lid 31 can be used as a writing surface or, alternatively, it can be used as a suitable location for a portable video player or other similar electronic device. The material from which the lid 31 is made is selected in order to be suitable for these purposes, typically a plastics material such as a nylon-ABS mix which provides a texture which is conducive to use as a writing surface.

Figure 4 shows the lid 31 in an intermediate position, closing the recess 20 and thus holding the contents securely within the recess 20 and also hiding them from view. This configuration enables access to cup holders 45, 46 which are provided in the form of two individual cup-shaped recesses. Alternatively, in a further example not shown in the drawings, the cup holders are provided within a single recess. The skilled man will readily understand that the cup holders can take any suitable form provided the configuration inhibits the movement of the cup relative to the seat back 16.

Figure 5 shows the lid 31 positioned as near to the pivot point of the seat back 16 as possible. In this configuration, the user has access to both the cup holders 45, 46 and also the power socket 19 and recess 20. Also apparent from this view is the dip 33 provided in the top of wall 24. This is intended to allow a cable to exit the recess 20 when the lid is covering the recess as shown in Figure 4.

In the configuration shown in Figure 5, the provision of the indentation 32 in place of a handle is advantageous for the passenger seated in a seat adjacent the seat back 16. In this configuration, the lid 31 provides a resting place for the elbow which is not hindered by the provision of a handle protruding from the lid 31.

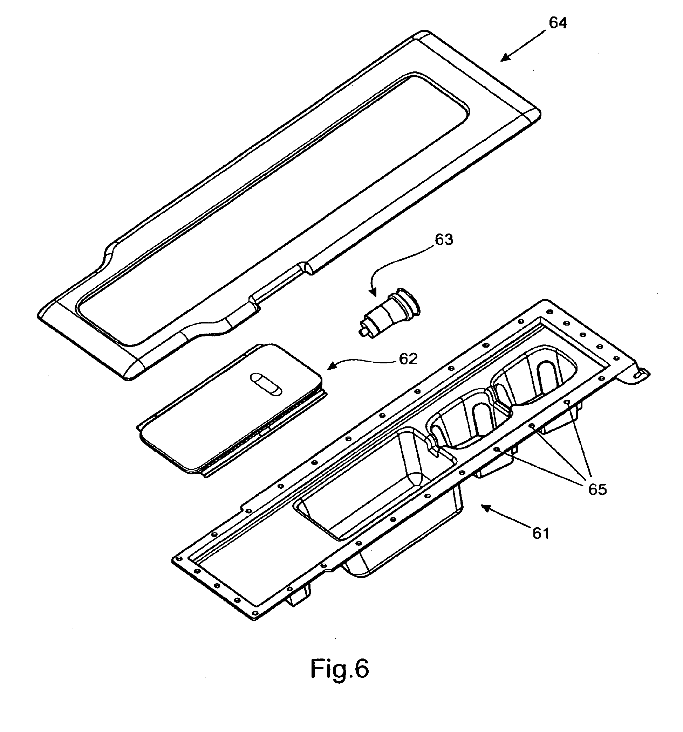

The example shown in Figures 3 to 5, is manufactured in four separate pieces, as illustrated in Figure 6, namely the lower portion 61 including the recesses 20, 25 and 26; the lid system 62; the connector 63 and upper surface or top finisher 64. Each of the pieces 61, 62, 64 is injection moulded using a standard injection moulding technique. The lid system 62 includes the lid 31 and any suitable means, such as runners or wave springs (not shown), for locating the lid 31 between the lower portion 61 and the top finisher 64 so that the lid 31 can slide between a number of discrete pre-determined positions.

The lower portion 61 is provided with a series of holes 65 into which are configured to receive a corresponding set of bosses (not shown) provided on the lower surface of top finisher 64. When the lower portion 61, lid system 62 and top finisher 64 are brought together the bosses enter the holes and are then heat staked in position. The connector 63 is then fitted into the lower portion 61. It is also possible to use alternative fixing systems such as screws.

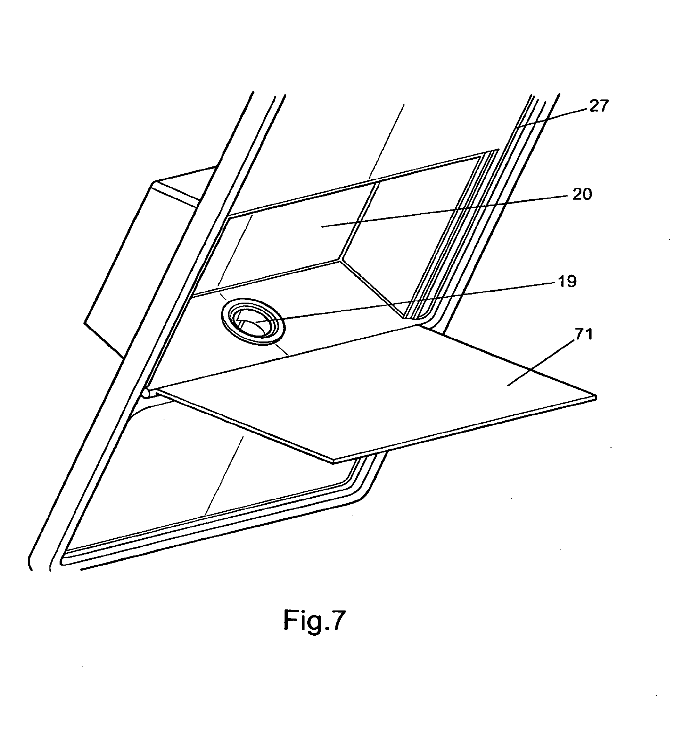

Figure 7 shows a different example of the present invention. Like reference numerals have been used to the extent to which features are shown that are the same or similar to those described above with reference to Figures 1 to 6. Figure 7 shows a surface 28 for use attachment to a seat back 16. The surface 28 is shown orientated as though it were applied to a seat back 16 in its upright position. The example shown in Figure 7 differs from the examples shown in Figures 1 to 6 in that the recess 20 is closed by a lid 71 that is pivotably attached to the surface. The provision of a pivotable lid 71 works better in configurations wherein the lip 27 does not extend so far along the seat back 16. In particular, this configuration would be better suited to applications in which the power socket and recess are located in an armrest. An armrest typically does not have as great an extent, in the lengthwise direction, as a seat back. The lid 71 is provided with a suitable closure means (not shown) such as, for example, a magnetic closure or push-push latch.

## Claims

1. A seating portion (16) for a seating assembly (10) in a motor vehicle, the seating portion being movable between at least a first, substantially upright position and a second, substantially horizontal position, wherein the seating portion (16) includes a connector (63) for an electronic device, **characterised in that** the connector is mounted in a recess (20) in the seating portion and is configured to be accessible when the seating portion is in each of the first and second positions, wherein the seating portion is pivotable between first and second positions, and wherein the recess (20) is configured to be accessible when the connector (63) is in use.

2. The seating portion (16) of claim 1, wherein the connector (63) is selected from the group consisting of a power socket (19), a USB connector and a connector for an MP3 player.

3. The seating portion of claim 2, wherein the recess (20) is configured to act as a storage tray.

4. The seating portion of any preceding claim, wherein the recess (20) is provided with a lid (71).

5. The seating portion of claim 4, wherein the lid is slidable.

6. The seating portion of claim 5, wherein the lid is provided with at least one indentation for sliding the lid (71).

7. The seating portion of claim 4, wherein the lid is pivotable.

8. The seating portion according to any one of the preceding claims, wherein the seating portion is a seat back (16).

9. The seat back (16) according to claim 8, wherein the second position is a stowed position.

10. The seating portion (16) according to any one of claims 1 to 7, wherein the seating portion is an armrest.

## Patentansprüche

1. Sitzteil (16) für eine Sitzanordnung (10) in einem Kraftfahrzeug, wobei der Sitzteil zwischen wenigstens einer ersten, im Wesentlichen senkrechten Position und einer zweiten, im Wesentlichen waagrechten Position umbewegt werden kann, wobei der Sitzteil (16) einen Anschluss (63) für ein elektronisches Gerät enthält, **dadurch gekennzeichnet, dass** der Anschluss in einer Vertiefung (20) im Sitzteil befestigt ist, und konfiguriert ist, um zugänglich zu sein, wenn sich der Sitzteil in der ersten sowie in der zweiten Position befindet, wobei der Sitzteil zwischen der ersten und der zweiten Position gedreht werden kann, und wobei die Vertiefung (20) konfiguriert ist, um zugänglich zu sein, wenn der Anschluss (63) im Gebrauch ist.

2. Sitzteil (16) nach Anspruch 1, wobei der Anschluss (63) aus der Gruppe bestehend aus einer Spannungsversorgungsbuchse (19), einem USB-Anschluss und einem Anschluss für einen MP3-Player ausgewählt wird.

3. Sitzteil nach Anspruch 2, wobei die Vertiefung (20) konfiguriert ist, um als Ablagefläche zu dienen.

4. Sitzteil nach einem der vorhergehenden Ansprüche, wobei die Vertiefung (20) mit einem Deckel (71) bereitgestellt wird.

5. Sitzteil nach Anspruch 4, wobei der Deckel verschiebbar ist.

6. Sitzteil nach Anspruch 5, wobei der Deckel mit wenigstens einer Einkerbung zum Verschieben des Deckels (71) bereitgestellt wird.

7. Sitzteil nach Anspruch 4, wobei der Deckel drehbar ist.

8. Sitzteil nach einem der vorhergehenden Ansprüche, wobei der Sitzteil eine Rückenlehne (16) ist.

9. Rückenlehne (16) nach Anspruch 8, wobei die zweite Position eine verstaute Position ist.

10. Sitzteil (16) nach einem der Ansprüche 1 bis 7, wobei der Sitzteil eine Armlehne ist.

## Revendications

1. Partie de siège (16) pour un ensemble de siège (10) dans un véhicule automobile, la partie de siège étant mobile entre au moins une première position sensiblement verticale et une seconde position sensiblement horizontale, dans laquelle la partie de siège (16) comprend un connecteur (63) pour un dispositif électronique, **caractérisée en ce que** le connecteur est monté dans un évidement (20) dans la partie de siège et est configuré pour être accessible lorsque la partie de siège se trouve dans chacune des première et seconde positions, dans laquelle la partie de siège est pivotante entre les première et seconde positions, et dans laquelle l'évidement (20) est configuré pour être accessible lorsque le connecteur (63) est en utilisation.

2. Partie de siège (16) selon la revendication 1, dans laquelle le connecteur (63) est sélectionné dans le groupe consistant en une prise électrique (19), un connecteur USB et un connecteur pour un lecteur MP3.

3. Partie de siège selon la revendication 2, dans laquelle l'évidement (20) est configuré pour agir comme un plateau de rangement.

4. Partie de siège selon l'une quelconque des revendications précédentes, dans laquelle l'évidement (20) est doté d'un couvercle (71).

5. Partie de siège selon la revendication 4, dans laquelle le couvercle est coulissant.

6. Partie de siège selon la revendication 5, dans laquelle le couvercle est doté d'au moins une indentation destinée à faire coulisser le couvercle (71).

7. Partie de siège selon la revendication 4, dans laquelle le couvercle est pivotant.

8. Partie de siège selon l'une quelconque des revendications précédentes, dans laquelle la partie de siège est un dossier de siège (16).

9. Dossier de siège (16) selon la revendication 8, dans lequel la seconde position est une position rabattue.

10. Partie de siège (16) selon l'une quelconque des revendications 1 à 7, dans laquelle la partie de siège est un accoudoir.
